# EUROPÄISCHE PATENTSCHRIFT

(11) **EP 2 176 563 B1**
(45) Veröffentlichungstag und Bekanntmachung des Hinweises auf die Patenterteilung: **05.10.2016**
(21) Anmeldenummer: 08785299.2
(22) Anmeldetag: 01.08.2008
(51) Int. Cl.: F16D 1/094

(54) **SPANNANORDNUNG SOWIE ABDRÜCK- UND KONUSRING DAFÜR**
CLAMPING ARRANGEMENT AND EJECTOR AND CONICAL RING FOR THE SAME
SYSTÈME DE SERRAGE ET BAGUE D'ÉJECTION ET BAGUE CONIQUE POUR CE SYSTÈME

(30) Priorität: 01.08.2007 DE 202007010709 U
(43) Veröffentlichungstag der Anmeldung: 21.04.2010
(73) Patentinhaber: Bikon-Technik Gmbh, 41468 Neuss (DE)
(72) Erfinder: DIZDAREVIC, Zlatko, 41468 Neuss (DE)
(74) Vertreter: Grosse Schumacher Knauer von Hirschhausen
(86) Internationale Anmeldenummer: PCT/EP2008/006358
(87) Internationale Veröffentlichungsnummer: WO 2009/015899

(56) Entgegenhaltungen:
- WO-A-02/12743
- DE-A1- 2 329 940
- DE-A1- 3 215 618
- DE-C1- 3 804 673
- US-A- 3 603 617

## Beschreibung

### Gebiet der Erfindung

Die Erfindung betrifft eine Spannanordnung sowie einen Abdrück- und einen Konusring dafür nach dem Oberbegriff des Anspruchs 1, 8 bzw. 11, und die Verwendung eines Abdruckringes (Anspruch 10).

### Hintergrund der Erfindung

Derartige lösbare Spannanordnungen werden zur kraftschlüssigen Verbindung zweier Bauteile, insbesondere einer Welle und einer Nabe, verwendet. Hierzu werden sie zwischen die Welle und die Nabe eingesetzt darin verspannt. Sie ermöglichen die Übertragung von hohen Drehmomenten und gegebenenfalls Axialschüben. Zu den Vorteilen gehören neben der Übertragbarkeit sehr großer Drehmomente eine hohe Rundlaufgenauigkeit und Spielfreiheit bei Wechselbeanspruchung. Die Einsatzgebiete derartiger Spannverbindungen sind aufgrund der Vorteile weit gestreut und umfassen beispielsweise die Montage von Schiffspropellern, Kupplungen, Ketten- und Schwungrädern und dgl.

Die Montage derartiger Spannanordnungen ist einfach. Hierzu werden zwei Konusringe mit einander zugewandten konischen Umfangsflächen in einen radialen Zwischenraum zwischen einer Welle und einer mit der Welle zu verbindenden Nabe eingebracht. Durch Verschieben der Konusringe gegeneinander in axialer Richtung aufeinander zu vergrößert sich der Außendurchmesser des Äußeren der Konusringe, während sich der Innendurchmesser des Inneren der Konusringe verringert. Die Verschiebung erfolgt mittels Spannschrauben, die den aufgeweiteten äußeren Konusring mit der Nabe, den zusammengedrückten inneren Konusring mit der Welle und die beiden Konusringe gegeneinander verspannen. Die Verspannung der Konusringe gegeneinander über die konischen Umfangsflächen ist dabei selbsthemmend.

Bei der Demontage muss die Selbsthemmung überwunden werden. Hierzu ist es aus der DE 1190266 C1 bekannt, an einem der Konusringe in Umfangsrichtung zwischen den Spannschraubenbohrungen Abdrückgewindebohrungen vorzusehen. In diese Abdrückgewindebohrungen sind Abdrückschrauben einschraubbar, die auf bohrungsfreie Stellen am anderen Konusring treffen und ein Abdrücken desselben in axialer Richtung ermöglichen. Dieser Lösung haftet jedoch der Nach-teil an, dass die Abdrückgewindebohrungen die Anzahl der in Umfangsrichtung verwendbaren Spannschrauben begrenzen. Sind beispielsweise vier Abdrückgewindebohrungen vorgesehen, können entlang des Umfangs entsprechend weniger Spannschrauben verwendet werden. Dies führt insbesondere bei geringen Durchmessern dazu, dass derartige Spannanordnungen ausreichend hohe Drehmomente nicht übertragen können.

Um die Anzahl der Spannschrauben nicht zu verringern, ist es aus dem DE 29603922 U1 und der DE 3343446 C1 bekannt, derartige Abdrückgewindebohrungen jeweils zwischen zwei Spannschraubenbohrungen vorzusehen. Allerdings schwächt diese Lösung die mechanische Belastbarkeit des Konusrings, da die Stege zwischen den Spannschraubenbohrungen und den Abdrückgewindebohrungen sehr schmal werden. Zudem ergibt sich ein inhomogener Spannungsverlauf.

Aus der DE 32 15 618 A1 und der GB 9 04 551 A ist jeweils eine Spannanordnung bekannt, bei der zwei Konusringe mittels eines Druckrings gegeneinander verspannt werden.

Die DE 38 04 673 C1 betrifft ein Außenspannsystem, bei dem von außen eine Hohlwelle auf eine innere Welle gestaucht wird, während die Erfindung ein zwischen einem äußeren und einem inneren Bauteil angeordnetes Zwischenspannsystem mit Kraftübertragung in radialer Richtung betrifft.

Bei den aus der DD 83 046 A, dem DE 73 02 286 U, dem DE 87 03 454 U1 und der DE 33 43 446 C1 bekannten Spannanordnungen sind Durchgangs- und Gewindebohrungen auf bekannte Weise benachbart zueinander angeordnet.

Die DE 296 03 922 U1 zeigt ein Außenspannsystem, das als Flanschanschluss dient.

### Zusammenfassung der Erfindung

Der Erfindung liegt daher die Aufgabe zugrunde, eine Spannanordnung sowie einen Abdrück- und einen Konusring dafür nach dem Oberbegriff des Anspruchs 1, 8 bzw. 11 zu schaffen, die hohe Drehmomente bei einfacher Demontierbarkeit übertragen können.

Diese Aufgabe wird entsprechend den Merkmalen der Ansprüche 1, 8 bzw. 11 gelöst.

Demnach wird eine Spannanordnung gemäß Anspruch 1 geschaffen, bei der einige Durchgangsbohrungen für Spannschrauben ein Abdrückgewinde zum Einschrauben von Abdrückschrauben aufweisen. Die ohnehin vorhandenen Durchgangsbohrungen für die Spannschrauben werden erfindungsgemäß somit auch für Abdrückschrauben verwendet. Zusätzliche Abdrückschraubengewindebohrungen sind nicht mehr erforderlich. Die Anzahl der nutzbaren Spannschrauben zum Verspannen der Spannanordnung bleibt daher unverändert. Auch sind keine zusätzlichen Bohrungen zwischen den Bohrungen für die Spannschrauben erforderlich, sodass der Konusring nicht geschwächt wird. Erfindungsgemäß kann somit die größtmögliche Anzahl von Spannschrauben verwendet werden, um das maximal übertragbare Drehmoment zu steigern, wobei die Spannanordnung nicht durch zusätzliche Bohrungen geschwächt wird und auf einfache Weise demontierbar ist.

Die Spannanordnung ist in Bezug auf die Anzahl und Ausgestaltung der Konusringe flexibel; sie ist überall dort einsetzbar, wo wenigstens zwei Konusringe gegeneinander und gegen eine innere und eine äußere Bauteilanordnung verspannt werden. Im einfachsten Fall besteht die innere (äußere) Bauteilanordnung aus einer Welle (Nabe), sie kann jedoch auf die Welle aufgesteckte (in die Nabe eingesetzte) oder mit dieser anderweitig verbundene weitere Bauteile aufweisen, mit denen der innere (äußere) Konusring dann in Kontakt steht.

So kann beispielsweise ein üblicher Konusring mit einem Ringflansch verwendet werden, in dem die Bohrungen zum Durchstecken einer Spannschraube vorgesehen sind. Der Ringflansch kann sich radial von der inneren Bauteilanordnung weg erstrecken und axial mit der äußeren Bauteilanordnung zur Anlage bringbar sein. Dadurch wird eine stabile Verspannung mit dem weiteren Konusring ermöglicht, der an den Ringflansch herangezogen wird. Gegebenenfalls erstreckt sich der Ringflansch in Richtung auf die innere Bauteilanordnung. Diese Ausgestaltung ist bei Spannanordnungen ebenfalls gebräuchlich.

Die aneinander anliegenden Kontaktflächen des inneren Konusrings und der inneren Bauteilanordnung können kreiszylindrisch oder konusförmig sein. Gleiches gilt für die aneinander anliegenden Kontaktflächen des äußeren Konusrings und der äußeren Bauteilanordnung. Hierdurch ist eine optimale Anpassung an die Geometrie der äußeren und/oder inneren Bauteilanordnung möglich.

Die Erfindung ist auch bei Spannanordnung verwendbar, bei denen mehrere, insbesondere zwei innere und/oder zwei äußere Konusringe axial benachbart zueinander vorgesehen sind.

Die Bohrungen sind dabei zweckmäßigerweise entlang des Umfangs gleich verteilt. Dies bewirkt einen homogenen Spannungsverlauf. Vorzugsweise weist dabei jede zweite, dritte oder vierte Bohrung zum Durchstecken einer Spannschraube Abdrückgewinde auf, so daß auch die Abdrückschrauben gleich verteilt sind und die dazwischen angeordneten Abdrückflächen nicht überbelastet werden.

Die Erfindung schafft ferner einen Abdrückring für eine derartige Spannanordnung, mit Bohrungen zum Durchstecken von Abdrückschrauben, die in die Abdrückgewinde eines Konusrings einschraubbar sind, und mit umfänglich zwischen den Bohrungen vorgesehenen Abdrückflächen, die an Spannschraubenköpfen teilweise gelöster Spannschrauben in Anlage bringbar sind, zum Übertragen einer Abdrückkraft auf die Spannschraubenköpfe beim Festschrauben der Abdrückschrauben. Der Abdrückring ist mit einer Vielzahl von Spannanordnungen kompatiblen Durchmessers und kompatibler Anzahl von Abdrückgewinden verwendbar.

Zweckmäßigerweise sind im Abdrückring Werkzeugbohrungen zum Durchstecken eines Schraubwerkzeugs durch eine Abdrückfläche vorgesehen. Dadurch können Spannschrauben weiter gelöst oder wieder eingeschraubt werden, ohne den Abdrückring wieder abnehmen zu müssen. Es ergibt sich eine einfache Einstellbarkeit der Spannschrauben beim Abdrücken.

Die Werkzeugbohrungen weisen zweckmäßigerweise einen kleineren Durchmesser als die Bohrungen zum Durchstecken der Abdrückschrauben auf, damit eine ausreichende Abdrückfläche für einen Kontakt mit einem Spannschraubenkopf verbleibt.

Der Abdrückring kann wie auch die Konusringe geschlossen oder entlang seines Umfangs durch einen Schlitz unterbrochen sein. Durch den Schlitz ergibt sich eine Anpassbarkeit des Umfangs beim Verspannen.

Der Abdrückring kann entlang seines Umfangs in wenigstens zwei Abschnitte unterteilt sein. Dadurch ist er leichter auch dann verwendbar, wenn bauliche Gegebenheiten das Aufstecken eines geschlossenen Rings auf eine Welle be- oder verhindern.

Die Erfindung schafft schließlich einen Konusring für eine derartige Spannanordnung, mit Bohrungen zum Durchstecken von Spannschrauben, die mit einem benachbarten weiteren Konusring der Spannanordnung verschraubbar sind, wobei eine Bohrung zum Durchstecken einer Spannschraube ein Abdrückgewinde für eine Abdrückschraube mit einem Durchmesser aufweist, der größer ist als der Durchmesser einer anderen, abdrückgewindelosen Bohrung. Dadurch entfällt die Notwendigkeit, zusätzliche Bohrungen für Abdrückschrauben vorzusehen.

Der Konusring kann je nach Aufbau der Spannanordnung ein innerer oder ein äußerer Konusring, d.h. mit der inneren Bauteilanordnung oder mit der äußeren Bauteilanordnung in Kontakt sein.

### Figurenbeschreibung

Fig. 1 ist ein Schnitt durch mittels Spannschrauben zwischen einer Welle und einer Nabe verspannte Konusringe.
Fig. 2 zeigt einen Konusring der Spannanordnung der Fig. 1 in Draufsicht.
Fig. 3 ist ein Schnitt durch eine Spannanordnung mit angesetztem Abdrückring.
Fig. 4 zeigt den Abdrückring der Fig. 3 in Draufsicht.
Fig. 5 bis 8 zeigen jeweils weitere Spannanordnungen im Schnitt.
Fig. 9 zeigt einen weiteren Abdrückring in Draufsicht.

### Detaillierte Beschreibung einzelner Ausführungsformen

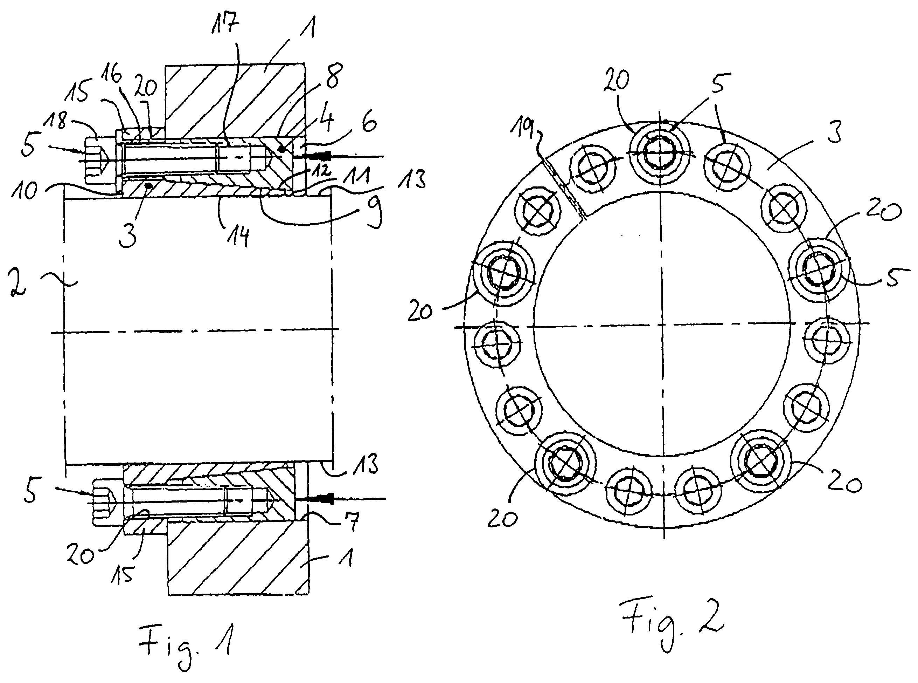

Zur Herstellung einer kraftschlüssigen Verbindung zwischen einer Nabe 1 und einer Welle 2 sind in Fig. 1 ein innerer und ein äußerer Konusring 3, 4 mittels Spannschrauben 5 gegeneinander und gegen die Nabe 1 und die Welle 2 verspannt.

Die Nabe 1 weist hierzu eine Aussparung 6 auf, in die die Welle 2 mit aufgesteckten Konusringen 3, 4 eingesetzt ist. Die Aussparung 6 bildet eine der Welle 2 zugewandte Mantelfläche 7, die hier zweckmäßigerweise kreiszylindrisch ausgebildet ist. Die Mantelfläche 7 kann auch konisch oder auf andere zweckmäßige Weise ausgebildet sein.

Auf der Mantelfläche 7 kommt eine hier ebenfalls kreiszylindrische Umfangsfläche 8 des äußeren Konusrings 4 zur Anlage. Der kreiszylindrischen Umfangsfläche 8 ab- und dem inneren Konusring 3 zugewandt ist eine konische Umfangsfläche 9.

Die Konizität bedingt einen Abfall des Innendurchmessers des äußeren Konusrings 4 von seiner der Spannschraube 5 zugewandten Stirnfläche 10 zur entgegengesetzten Stirnfläche 11. Der Außendurchmesser bleibt unverändert. Die radiale Dicke des äußeren Konusrings 4 erhöht sich dementsprechend in Spannschraubenrichtung von der Stirnfläche 10 zur Stirnfläche 11.

Die konische Umfangsfläche 9 kommt auf einer ebenfalls konischen Umfangsfläche 12 des inneren Konusrings 3 zur Anlage. Die Umfangsflächen 9, 12 weisen dabei den gleichen Konuswinkel auf, steigen jedoch in entgegengesetzte axiale Richtungen an. Der konischen Umfangsfläche 12 des inneren Konusrings 3 ab- und einer zylindrischen Umfangsfläche 13 der Welle 2 zugewandt ist eine kreiszylindrische Umfangsfläche 14 des inneren Konusring 3, der über diese auf der Welle 2 aufliegt.

Der innere Konusring 3 weist einen umlaufenden Ringflansch 15 auf, der sich in axialer Richtung an der Nabe 1 abstützt. Bohrungen 16 zum Durchstecken der Spannschrauben 5 erstrecken sich durch den Ringflansch 15. In Verlängerung der Bohrungen 16 sind im äußeren Konusring 4 Gewindebohrungen 17 zum Einschrauben der Spannschrauben 5 vorgesehen.

Zur Montage der in Fig. 1 dargestellten Spannanordnung werden zunächst die Konusringe 3, 4 in den Ringraum zwischen Nabe 1 und Welle 2 eingebracht. Anschließend werden die Spannschrauben 5 durch die Bohrungen 16 im Ringflansch 15 des inneren Konusrings 3 hindurch gesteckt und in die Gewindebohrungen 17 des äußeren Konusrings 4 eingeschraubt. Spannschraubenköpfe 18 der Spannschrauben 5 stützen sich dabei am Ringflansch 15 ab, sodass beim Festschrauben die Konusringe 3, 4 in axialer Richtung aufeinander zu bewegt werden. In Folge der Steigung der aneinander anliegenden konischen Umfangsflächen 9,12 weitet sich der äußere Konusring 4 in radialer Richtung aus, während der innere Konusring 3 in radialer Richtung zusammen gedrückt wird. Es ergibt sich eine Verspannung in radialer Richtung, und zwar zwischen den jeweils paarweise aneinander anliegenden kreiszylindrischen Umfangsflächen 7, 8, konischen Umfangsflächen 9,12 und kreiszylindrischen Umfangsflächen 13,14. Die beiden Konusringe 3, 4 werden also gegeneinander und gegen die Nabe 1 und die Welle 2 verspannt. Es ergibt sich eine kraftschlüssige Verbindung zwischen der Nabe 1 und der Welle 2 durch die Konusringe 3, 4. Die kraftschlüssige Verbindung ermöglicht die Übertragung eines Drehmoments von der Welle 2 auf die Nabe 1 und umgekehrt. Zudem sind Axialkräfte zwischen der Welle 1 und der Nabe 1 übertragbar.

Die Bohrungen 16 für die Spannschrauben 5 sind entlang des Umfangs des inneren Konusrings 3 vorzugsweise gleich verteilt, vgl. Fig. 2. Die Bohrungen 16 weisen einen Durchmesser auf, der etwas größer als der Durchmesser der Spannschrauben 5 sein kann. Hierdurch wird ein radiales Spiel der Spannschrauben 5 in den Bohrungen 16 geschaffen, das ein radiales Zusammendrücken des inneren Konusrings 3 beim Verspannen ermöglicht. Zusätzlich kann ein Schlitz 19 vorgesehen sein, der den Konusring 3 in Umfangsrichtung unterbricht, damit dieser einfacher zusammendrückbar ist.

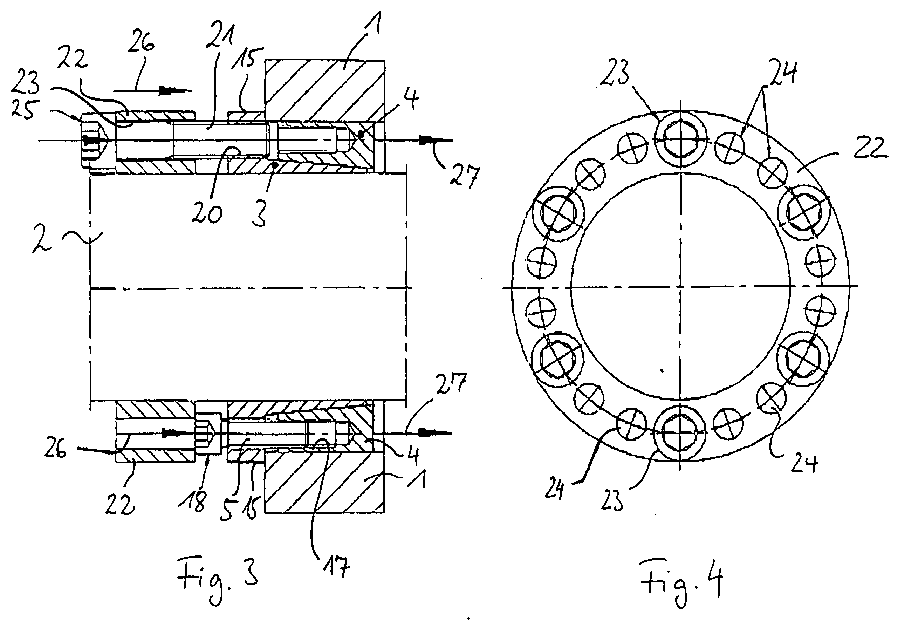

Wenigstens eine der Bohrungen 16 im inneren Konusring 3 weist ein Abdrückgewinde 20 auf. Rein beispielhaft sind in Fig. 2 fünf Abdrückgewinde 20 illustriert. Die Abdrückgewinde 20 sind Innengewinde, in die wegen des größeren Durchmessers der Bohrung 16 die Spannschrauben 5 nicht einschraubbar sind. Stattdessen sind nach Entfernen der Spannschrauben 5 aus den Bohrungen 16 mit Abdrückgewinde 20 Abdrückschrauben 21 mit dem Ringflansch 15 des inneren Konusrings 3 verschraubbar, vgl. Fig. 3. Dies erfolgt zur nachfolgend beschriebenen Demontage des Spannsatzes.

Zum Lösen der Verspannung zwischen Nabe 1, äußerem Konusring 4, innerem Konusring 3 und Welle 2 wird ein Abdrückring 22 verwendet.

Der Abdrückring 22 ist auf die Welle 2 aufschiebbar und weist Bohrungen 23 zum Durchstecken der Abdrückschrauben 21 an Stellen auf, die mit den die Abdrückgewinde 20 aufweisenden Bohrungen 16 im Ringflansch 15 in Flucht bringbar sind. An den Stellen, die in dieser Position Bohrungen 20 ohne Abdrückgewinde gegenüber liegen, ist der Abdrückring 22 bohrungsfrei; gegebenenfalls können dort wie in Fig. 4 dargestellt Werkzeugbohrungen 24 für ein Drehwerkzeug vorgesehen sein. Die Werkzeugbohrungen 24 weisen einen Durchmesser auf, der kleiner ist als der Durchmesser der Spannschraubenköpfe 18. Hierdurch wird einerseits eine Kraftübertragung vom Abdrückring 22 auf die Spannschraubenköpfe 18 sichergestellt und andererseits ein Lösen oder Festschrauben der Spannschrauben 5 mittels eines Werkzeuges wie etwa eines Schraubendrehers in montiertem Zustand des Abdrückrings 22 ermöglicht.

Zur Demontage werden die Spannschrauben 5 aus den Bohrungen 16 mit Abdrückgewinde 20 entfernt. Die anderen Spannschrauben 5 werden gelöst, also zweckmäßigerweise jeweils um den gleichen Betrag aus den Gewindebohrungen 17 des äußeren Konusrings 4 herausgeschraubt. Der Spannschraubenkopf 18 dieser gelösten Spannschrauben 5 ist dann wie in Fig. 3 dargestellt gegenüber dem Ringflansch 15 beabstanden. Anschließen wird der Abdrückring 22 auf die Spannschraubenköpfe 18 der gelösten Spannschrauben 5 aufgelegt und über die Abdrückschrauben 21 mit dem inneren Konusring 3 verschraubt. Dadurch wird über die Abdrückschraubenköpfe 25 der Abdrückring 22 in axialer Richtung auf den inneren Konusring 3 bewegt, was durch den Pfeil 26 illustriert ist. Dies wiederum bewirkt eine Kraft auf die Spannschraubenköpfe 18 der gelösten Spannschrauben 5. Die Spannschrauben 5 übertragen diese Kraft über die Gewindebohrungen 17 auf den äußeren Konusring 4, der damit in axialer Richtung entsprechend den Pfeilen 27 aus dem verspannten Zustand zwischen innerem Konusring 3 und Nabe 1 herausgedrückt wird. Die Spannverbindung wird damit gelöst.

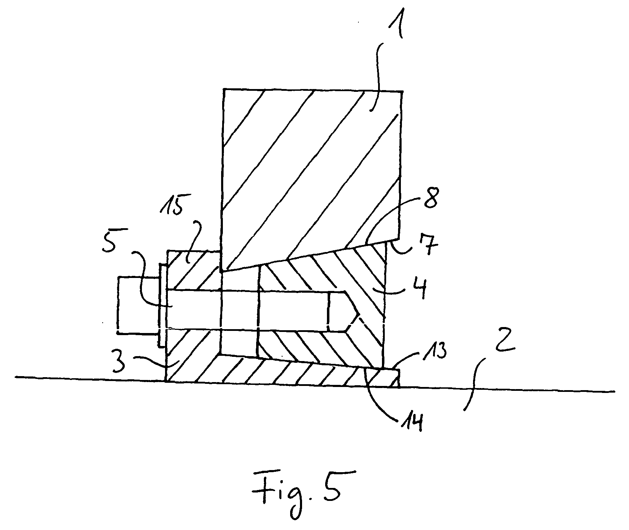

Fig. 5 illustriert, dass die Umfangsflächen 7, 8 der Nabe 1 bzw. des äußeren Konusrings 4 und/oder die Umfangsflächen 13, 14 der Welle 2 bzw. des inneren Konusrings 3 nicht kreiszylindrisch sein müssen, sondern wie beispielhaft dargestellt ebenfalls konusförmig sein können. Der Konuswinkel der Umfangsflächen 7, 8 bzw. 13,14 ist dabei paarweise identisch.

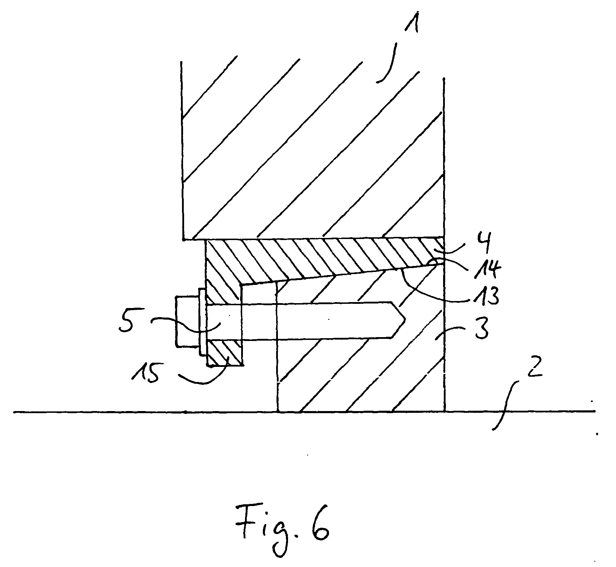

In Fig. 6 ist zusätzlich zu den konischen Umfangsflächen 13, 14 illustriert, dass die Rollen des inneren und äußeren Konusrings 3 bzw. 4 gegenüber der Ausführungsform der Fig. 1 vertauscht sein können. Hierbei weist der äußere Konusring 4 den Ringflansch 15 auf. Der Ringflansch 15 erstreckt sich radial in Richtung auf die Welle 2 und ist von dieser beabstandet, kann sich jedoch gegebenenfalls an dieser radial abstützen. Der Aufbau des Ringflansches 15 mit Bohrungen 16, die teilweise Abdrückgewinde 20 aufweisen, entspricht dem Aufbau des in Fig. 1 dargestellten Ringflansches 15. Die in Fig. 6 dargestellte Ausführungsform ist auf gleiche Weise demontierbar, wie es in Fig. 3 illustriert ist.

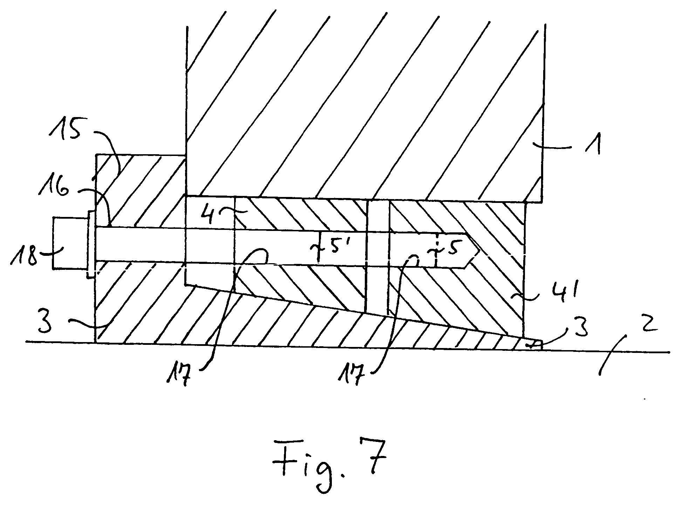

In der Ausführungsform gemäß Fig. 7 sind zwei äußere Konusringe 4, 4' axial benachbart angeordnet. Bei einer derartigen Spannanordnung erstrecken sich einige der Spannschrauben 5 wie dargestellt durch Bohrungen 16 im Ringflansch 15 und im inneren Konusring 4 hindurch bis in Gewindebohrungen 17 im Konusring 4' hinein. Andere Spannschrauben 5' sind kürzer und erstrecken sich durch Bohrungen 16 im Ringflansch 15 hindurch in Gewindebohrungen 17 im Konusring 4 hinein. Diese kürzeren Spannschrauben 5' erreichen den Konusring 4' nicht. Einige der Bohrungen 16 im Ringflansch 15, durch den sich die Spannschrauben 5 erstrecken, sowie einige der Bohrungen 16 im Ringflansch 15, durch die sich die kürzeren Spannschrauben 5' erstrecken, weisen dabei Abdrückgewinde 20 auf.

Zur Demontage werden zunächst diejenigen längeren Spannschrauben 5 entfernt, die in Bohrungen 16 mit Abdrückgewinden 20 eingesetzt sind. Die verbleibenden längeren Spannschrauben 5, nicht jedoch die kürzeren Spannschrauben 5', werden dann etwas gelöst, beispielsweise um eine oder zwei Windungen, um wie in Fig. 3 dargestellt einen Abstand zwischen Spannschraubenkopf 18 und Ringflansch 15 zu schaffen. Danach wird der Abdrückring 22 angesetzt und mit Abdrückschrauben 21 an den Ringflansch gezogen, wobei er auf die gelösten längeren Spannschrauben 5 drückt, sodass der Konusring 4' aus dem verspannten Zustand gelöst wird. Der Abdrückring 22 wird entfernt, die restlichen der längeren Spannschrauben 5 werden aus dem Konusring 4' herausgeschraubt und der Konusring 4' wird aus der Spannanordnung gezogen. Anschließend wird der Konusring 4 gelöst. Dies erfolgt wie im Ausführungsbeispiel der Fig. 1 bis 4. Dazu werden zunächst die kürzeren Spannschrauben 5' entfernt, die sich durch Bohrungen mit Abdrückgewinde 20 erstrecken. Die verbleibenden kürzeren Spannschrauben 5' werden ein Stück herausgedreht, um einen Abstand zwischen Spannschraubenkopf 18 und Ringflansch 19 zu schaffen, wie es in Fig. 3 dargestellt ist. Danach wird der Abdrückring 22 an die Spannschraubenköpfe 18 der gelockerten kürzeren Spannschrauben 5' angelegt und mit Abdrückschrauben 21 axial in Richtung auf den Ringflansch 15 gezogen. Dadurch wird auch der äußere Konusring 4 aus der Verspannung gelöst.

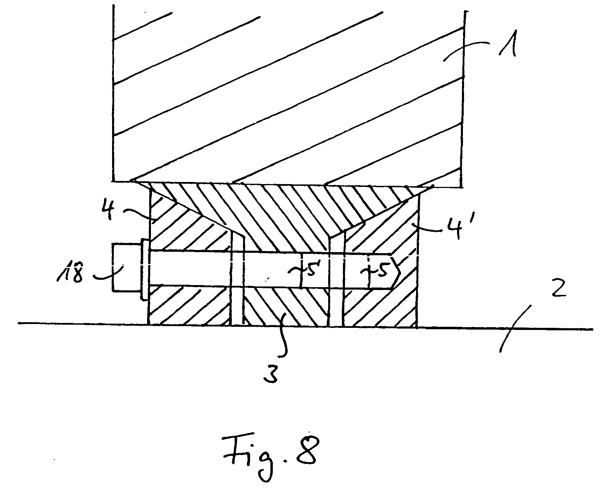

Bei der in Fig. 8 dargestellten Ausführungsform ist ein äußerer Konusring 3 vorgesehen, der einen T-förmigen Querschnitt aufweist. Die Arme des T sind dabei konisch von der Mitte nach außen verjüngt. Beidseits des gegebenenfalls von der Welle 2 beabstandeten Mittelstegs des T-förmigen Konusrings 3 ist jeweils ein innerer Konusring 4, 4' vorgesehen. Die Konuswinkel der inneren Konusringe 4, 4' sind auf die Konuswinkel der Arme des T-förmigen äußeren Konusrings 3 abgestimmt. Die Konusringe 4, 4' sind über Spannschrauben 5, 5' mit dem Konusring 3 und der Welle 2 verspannbar. Hierzu werden wie in der Ausführungsform der Fig. 7 verschieden lange Spannschrauben 5, 5' verwendet. Bei der Demontage ist dementsprechend ebenfalls zweistufig vorzugehen. In der ersten Stufe wird der innere Konusring 4' gelöst, indem die längeren Spannschrauben 5 entfernt bzw. teilweise aus den Gewindebohrungen 17 des inneren Konusrings 4' herausgedreht werden. Anschließend wird mit Hilfe des Abdrückrings 22 der innere Konusring 4' aus der Verspannung gelöst. In der zweiten Stufe werden die kürzeren Spannschrauben 5', die sich durch Bohrungen 16 im inneren Konusring 4 erstrecken, welche Abdrückgewinde 20 aufweisen, entfernt. Die verbleibenden kürzeren Spannschrauben 5' werden zweckmäßigerweise um jeweils denselben Betrag gelockert. Anschließend wird der Konusring 22 an die Schraubenköpfe 18 der gelösten kürzeren Spannschrauben 5' angelegt und mit dem inneren Konusring 4 über Abdrückschrauben 21 verschraubt. Werden die Abdrückschrauben 21 weiter eingedreht, bewirken sie eine axial gerichtete Kraft auf die gelösten kürzeren Spannschrauben 5'. Die Spannverbindung ist damit gelöst.

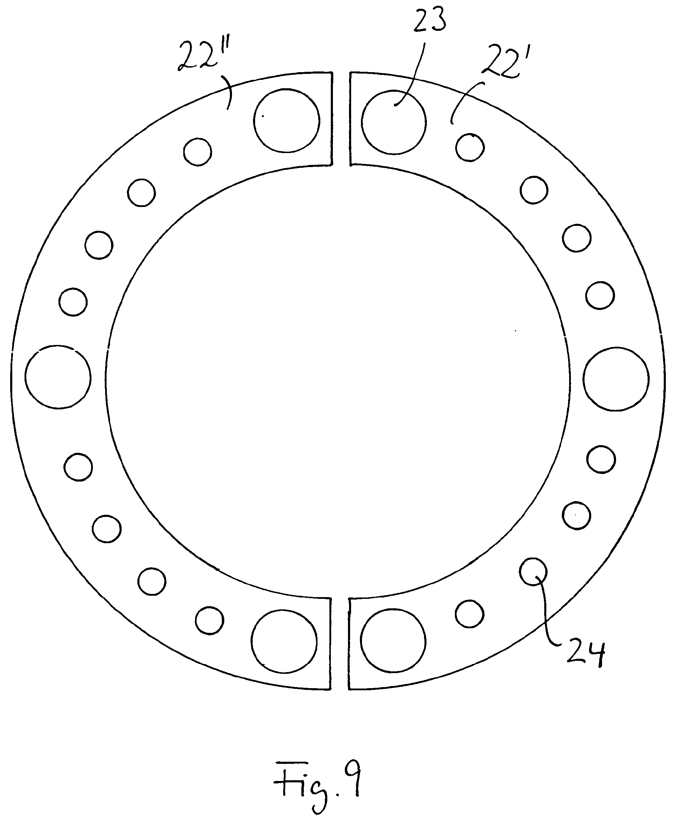

Der Abdrückring 22 kann auch zweiteilig ausgestaltet sein, vgl. Fig. 9. Seine beiden Hälften 22' und 22" sind von außen auf die Welle 2 aufsetzbar. Dies ist dann von Vorteil, wenn aufgrund baulicher Gegebenheiten ein Aufschieben auf die Welle 2 nicht möglich ist.

Zweckmäßigerweise sind in diesem Fall die Bohrungen 23 für Abdrückschrauben jeweils für die Enden der Teile 22', 22" vorgesehen. Die mit diesen Bohrungen 23 fluchtenden Bohrungen 16 im Ringflansch 15 weisen jeweils ein Abdrückgewinde 20 auf. Dadurch ist trotz Gleichverteilung der Spannschrauben 5 entlang des Umfangs des Ringflansches 15 sichergestellt, dass die Hälften 22', 22" des Abdrückrings 22 mechanisch gleichmäßig belastet werden.

### Bezugszeichenliste

- 1: Nabe
- 2: Welle
- 3: innerer Konusring
- 4, 4': äußerer Konusring
- 5: Spannschraube
- 6: Aussparung
- 7: Mantelfläche
- 8: Umfangsfläche
- 9: Umfangsfläche
- 10: Stirnfläche
- 11: Stirnfläche
- 12: Umfangsfläche
- 13: Umfangsfläche
- 14: Umfangsfläche
- 15: Ringflansch
- 16: Bohrung
- 17: Gewindebohrung
- 18: Spannschraubenkopf
- 19: Schlitz
- 20: Abdrückgewinde
- 21: Abdrückschraube
- 22: Abdrückring
- 22', 22": Hälften
- 23: Bohrung
- 24: Werkzeugbohrung
- 25: Abdrückschraubenkopf
- 26: Pfeil
- 27: Pfeil
- 28: Umfangsfläche

## Patentansprüche

1. Spannanordnung zur kraftschlüssigen Verbindung einer eine Ausnehmung aufweisenden äußeren Bauteilanordnung, insbesondere einer Nabe (1), auf einer inneren Bauteilanordnung, insbesondere einer Welle (2), mit
einem inneren Konusring (3), der an der inneren Bauteilanordnung anliegt und eine dieser abgewandte konische Umfangsfläche (12) aufweist, und
einem äußeren Konusring (4), der an der äußeren Bauteilanordnung anliegt und eine dieser abgewandte konische Umfangsfläche (9) zum Zusammenwirken mit der konischen Umfangsfläche (12) des inneren Konusrings (3) aufweist,
wobei einer der Konusringe (3) Bohrungen (16) zum Durchstecken von Spannschrauben (5) und der jeweils andere der Konusringe (4) Gewindebohrungen (17) zum Einschrauben der Spannschrauben (5) zum Verspannen der Konusringe (3, 4) gegeneinander über die einander zugewandten konischen Umfangsflächen (9, 12) und gegen die innere und äußere Bauteilanordnung aufweist,
**dadurch gekennzeichnet, dass**
eine Bohrung (16) zum Durchstecken einer Spannschraube (5) ein Abdrückgewinde (20) für eine Abdrückschraube (21) aufweist, deren Durchmesser größer ist als der Durchmesser der entsprechenden Spannschraube (5), und
ein Abdrückring (22) mit einer Bohrung (23) zum Durchstecken der in das Abdrückgewinde (20) einschraubbaren Abdrückschraube (21) vorgesehen ist und eine Abdrückfläche für einen Spanschraubenkopf (18) einer unvollständig in eine entsprechende Gewindebohrung (17) eingeschraubte Spannschraube (5) zum Übertragen einer Abdrückkraft darauf beim Einschrauben der Abdrückschraube (21) aufweist.

2. Spannanordnung nach Anspruch 1, **dadurch gekennzeichnet, dass** die Bohrung (16) zum Durchstecken einer Spannschraube (5) in einem Ringflansch (15) vorgesehen ist.

3. Spannanordnung nach Anspruch 2, **dadurch gekennzeichnet, dass** der Ringflansch (15) sich radial von der inneren Bauteilanordnung weg erstreckt und axial mit der äußeren Bauteilanordnung zur Anlage bringbar ist.

4. Spannanordnung nach Anspruch 2, **dadurch gekennzeichnet, dass** der Ringflansch (15) sich radial in Richtung auf die innere Bauteilanordnung erstreckt.

5. Spannanordnung nach einem der Ansprüche 1 bis 4, **dadurch gekennzeichnet, dass** die aneinander anliegenden Umfangsflächen (7,8) des inneren Konusrings (3) und der inneren Bauteilanordnung konusförmig sind, und/oder die aneinander anliegenden Kontaktflächen des äußeren Konusrings (4) und der äußeren Bauteilanordnung konusförmig sind.

6. Spannanordnung nach einem der Ansprüche 1 bis 5, **dadurch gekennzeichnet, dass** wenigstens zwei innere und/oder wenigstens zwei äußere Konusringe (4, 4') axial benachbart zueinander vorgesehen sind.

7. Spannanordnung nach einem der Ansprüche 1 bis 6, **dadurch gekennzeichnet, dass** mehrere Bohrungen (16, 23) entlang des Umfangs gleich verteilt sind und jede zweite, dritte oder vierte Bohrung (16) zum Durchstecken einer Spannschraube (5) ein Abdrückgewinde (21) aufweist.

8. Abdrückring (22) für eine Spannanordnung zur kraftschlüssigen Verbindung einer eine Ausnehmung aufweisenden äußeren Bauteilanordnung auf einer inneren Bauteilanordnung nach einem der Ansprüche 1 bis 7,
**gekennzeichnet durch**
mit Abdrückgewinden (20) eines Konusrings (4) der Spannanordnung in Flucht bringbare Bohrungen (23) zum Durchstecken von Abdrückschrauben (21), die in die Abdrückgewinde (20) einschraubbar sind, und **durch** umfänglich zwischen den Bohrungen (23) vorgesehene Abdrückflächen, die an Spannschraubenköpfen (18) teilweise gelöster Spannschrauben (5) in Anlage bringbar sind, zum Übertragen einer Abdrückkraft auf die Spannschraubenköpfe (18) beim Festschrauben der Abdrückschrauben (21), sowiemit einer Werkzeugbohrung (24) zum Durchstecken eines Schraubwerkzeugs **durch** eine Abdrückfläche, wobei die Werkzeugbohrung (24) einen kleineren Durchmesser als die Bohrung (23) zum Durchstecken der Abdrückschraube (21) aufweist.

9. Abdrückring nach Anspruch 9 oder 10, **dadurch gekennzeichnet, dass** der Abdrückring (22) geschlossen oder entlang seines Umfangs durch einen Schlitz unterbrochen ist, und/oder Abdrückring (22) entlang seines Umfangs in wenigstens zwei Abschnitte (22', 22") unterteilt ist.

10. Verwendung eines Abdrückrings (22) zum Lösen einer Spannanordnung nach einem der Ansprüche 1 bis 7, die eine eine Ausnehmung aufweisende äußere Bauteilanordnung auf einer inneren Bauteilanordnung kraftschlüssig verbindet, wobei der Adrückring (22) mit Abdrückgewinden (20) eines Konusrings (4) der Spannanordnung in Flucht bringbare Bohrungen (23) zum Durchstecken von Abdrückschrauben (21), die in die Abdrückgewinde (20) einschraubbar sind, und umfänglich zwischen den Bohrungen (23) vorgesehene Abdrückflächen, die an Spannschraubenköpfen (18) teilweise gelöster Spannschrauben (5) in Anlage bringbar sind, zum Übertragen einer Abdrückkraft auf die Spannschraubenköpfe (18) beim Festschrauben der Abdrückschrauben (21), aufweist,

11. Konusring (3) für eine Spannanordnung zur kraftschlüssigen Verbindung einer eine Ausnehmung aufweisenden äußeren Bauteilanordnung auf einer inneren Bauteilanordnung nach einem der Ansprüche 1 bis 7, mit Bohrungen (16) zum Durchstecken von Spannschrauben (5), die mit einem benachbarten weiteren Konusring (4) der Spannanordnung verschraubbar sind,
**dadurch gekennzeichnet,**
**dass** eine Bohrung (16) zum Durchstecken einer Spannschraube (5) ein Abdrückgewinde (17) für eine Abdrückschraube (21) mit einem Durchmesser aufweist, der größer ist als der Durchmesser einer anderen, abdrückgewindelosen Bohrung (16).

12. Konusring nach Anspruch 11, **dadurch gekennzeichnet, dass** der Konusring ein innerer oder ein äußerer Konusring (3, 4) der Spannanordnung ist, und/oder jede zweite, dritte oder vierte Bohrung (16) ein Abdrückgewinde (17) aufweist.

13. Konusring nach Anspruch 11 oder 12, **dadurch gekennzeichnet, dass** die Bohrungen (16) zum Durchstecken einer Spannschraube (5) in einem Ringflansch (15) vorgesehen sind.

14. Konusring nach Anspruch 13, **dadurch gekennzeichnet, dass** der Ringflansch (15) sich radial von der inneren Bauteilanordnung weg erstreckt und axial mit der äußeren Bauteilanordnung zur Anlage bringbar ist, oder der Ringflansch (15) sich in Richtung auf die innere Bauteilanordnung erstreckt.

## Claims

1. Clamping arrangement for the force-fit connection of an outer component arrangement having a recess, particularly of a hub (1), to an inner component arrangement, particularly a shaft (2), with
an inner conical ring (3), which contacts the inner component arrangement, and which has a conical peripheral surface (12) that faces away from said arrangement, and
an outer conical ring (4), which contacts the outer component arrangement, and which has a conical peripheral surface (9) that faces away from said arrangement, for interaction with the conical peripheral surface (12) of the inner conical ring (3),
where one of the conical rings (3) has bores (16) for the leadthrough of clamping screws (5) and the respective other conical ring (4) has threaded bores (17) for screwing in the clamping screws (5) to brace the conical rings (3, 4) against one another via the mutually facing conical peripheral surfaces (9, 12), and against the inner and outer component arrangement,
**characterized in that**
a bore (16) for the leadthrough of a clamping screw (5) has an ejector thread (20) for an ejector screw (21), the diameter of which is greater than the diameter of the corresponding clamping screw (5), and
an ejector ring (22) is provided with a bore (23) for the leadthrough of the ejector screw (21) which can be screwed into the ejector thread (20), said the ejector ring (22) having an ejector surface for a clamping screw head (18) of a clamping screw (5) that is incompletely screwed into the corresponding threaded bore (17), for the transmission of an ejector force onto it during the screwing in of the ejector screw (21).

2. Clamping arrangement according to Claim 1, **characterized in that** the bore (16) for the leadthrough of a clamping screw (5) is provided in a ring flange (15).

3. Clamping arrangement according to Claim 2, **characterized in that** the ring flange (15) extends radially away from the inner component arrangement, and can be brought to bear axially against the outer component arrangement.

4. Clamping arrangement according to Claim 2, **characterized in that** the ring flange (15) extends radially in the direction of the inner component arrangement.

5. Clamping arrangement according to one of Claims 1-4, **characterized in that** the mutually applied peripheral surfaces (7, 8) of the inner conical ring (3) and of the inner component arrangement are conical in shape, and/or **in that** the mutually applied contact surfaces of the outer conical ring (4) and of the outer component arrangement are conical in shape.

6. Clamping arrangement according to one of Claims 1-5, **characterized in that** at least two inner and/or at least two outer conical rings (4, 4') are provided in such a way that they are axially adjacent.

7. Clamping arrangement according to one of Claims 1-6, **characterized in that** several bores (16, 23) are distributed equally along the periphery, and each second, third or fourth bore (16) has an ejector thread (21) for the leadthrough of a clamping screw (5).

8. Ejector ring (22) for a clamping arrangement for the force-fit connection of an outer component arrangement having a recess, to an inner component arrangement, according to one of Claims 1-7,
**characterized by**
bores (23), which can be brought into alignment with ejector threads (20) of a conical ring (4) of the clamping arrangement, for the leadthrough of ejector screws (21) which can be screwed into the ejector threads (20), and by ejector surfaces that are provided peripherally between the bores (23), and can be brought to bear against clamping screw heads (18) of partially loosened clamping screws (5) for the transmission of an ejector force onto the clamping screw heads (18) during tightening of the ejector screws (21), and with a tool bore (24) for the leadthrough of a screw tool through an ejector surface, wherein the tool bore (24) has a smaller diameter than the bore (23) for the leadthrough of the ejector screw (21).

9. Ejector ring according to Claim 9 or 10, **characterized in that** the ejector ring (22) is closed or interrupted along its periphery by a slit, and/or **in that** the ejector ring (22) is subdivided along its periphery into at least two sections (22', 22").

10. Use of an ejector ring (22) for loosening a clamping arrangement according to one of the claims 1 to 7, the clamping arrangement making a force-fit connection of an outer component arrangement having a recess, to an inner component arrangement, wherein the ejector ring (22) has bores (23), which can be brought into alignment with ejector threads (20) of a conical ring (4) of the clamping arrangement, for the leadthrough of ejector screws (21) which can be screwed into the ejector threads (20), and by ejector surfaces that are provided peripherally between the bores (23), and can be brought to bear against clamping screw heads (18) of partially loosened clamping screws (5) for the transmission of an ejector force onto the clamping screw heads (18) during tightening of the ejector screws (21).

11. Conical ring (3) for a clamping arrangement for the force-fit connection of an outer component arrangement having a recess, to an inner component arrangement, according to one of Claims 1-7, with bores (16) for the leadthrough of clamping screws (5) which can be screwed to an adjacent additional conical ring (4) of the clamping arrangement,
**characterized in that**
a bore (16), for the leadthrough of a clamping screw (5) has an ejector thread (17) for an ejector screw (21) with a diameter that is greater than the diameter of another bore (16) which lacks an ejector thread.

12. Conical ring according to Claim 11, **characterized in that** the conical ring is an inner or an outer conical ring (3, 4) of the clamping arrangement; and/or each second, third or fourth bore (16) has an ejector thread (17).

13. Conical ring according to Claim 11 or 12, **characterized in that** the bores (16) are provided for the leadthrough of a clamping screw (5) in a ring flange (15).

14. Conical ring according to Claim 13, **characterized in that** the ring flange (15) extends radially away from the inner component arrangement and can be brought to bear axially against the outer component arrangement; or **in that** the ring flange (15) extends in the direction toward the inner component arrangement.

## Revendications

1. Ensemble de serrage pour la liaison par complémentarité de force d'un ensemble extérieur d'éléments de construction comportant un évidement, notamment un moyeu (1), sur un ensemble intérieur d'éléments de construction, notamment un arbre (2), avec
une bague conique (3) intérieure qui est adjacente à l'ensemble intérieur d'éléments de construction et qui comporte une surface périphérique (12) conique opposée à celui-ci et
une bague conique (4) extérieure qui est adjacente à l'ensemble extérieur d'éléments de construction et qui comporte une surface périphérique (9) conique opposée à celui-ci, pour interagir avec la surface périphérique (12) conique de la bague conique (3) intérieure,
l'une (3) des bagues coniques comportant des perçages (16) destinés à y faire passer des vis de serrage (5) et l'autre (4) respective des bagues de serrage comportant des taraudages (17) destinés à y visser les vis de serrage (5), pour contraindre les bagues coniques (3, 4) l'une contre l'autre par l'intermédiaire des surfaces périphériques (9, 12) coniques qui se font face et contre l'ensemble intérieur et extérieur d'éléments de construction,
**caractérisé en ce**
**qu'**un perçage (16) destiné à y faire passer une vis de serrage (5) comporte un taraudage de chasse (20) pour une vis de chasse (21), dont le diamètre est supérieur au diamètre de la vis de serrage (5) correspondante et en ce qu'il est prévu une bague de chasse (22) avec un perçage (23), pour y faire passer la vis de chasse (21) susceptible d'être vissée dans le taraudage de chasse (20) et en ce qu'elle comporte une surface de chasse pour une tête (18) de vis de serrage (5) vissée de manière incomplète dans un taraudage (17) correspondant pour transmettre une force de chasse sur celle-ci, lors du vissage de la vis de chasse (21).

2. Ensemble de serrage selon la revendication 1, **caractérisé en ce que** le perçage (16) destiné à y faire passer une vis de serrage (5) est prévu dans une bride annulaire (15).

3. Ensemble de serrage selon la revendication 2, **caractérisé en ce que** la bride annulaire (15) s'étend en direction radiale en s'éloignant de l'ensemble intérieur d'éléments de construction et est susceptible d'être amenée en appui sur l'ensemble extérieur d'éléments de construction.

4. Ensemble de serrage selon la revendication 2, **caractérisé en ce que** la bague annulaire (15) s'étend en direction radiale vers l'ensemble intérieur d'éléments de construction.

5. Ensemble de serrage selon l'une quelconque des revendications 1 à 4, **caractérisé en ce que** les surfaces périphériques (7, 8) adjacentes l'une à l'autre de la bague conique (3) intérieure et de l'ensemble intérieur d'éléments de construction sont de forme conique et/ou les surfaces de contact adjacentes l'une à l'autre de la bague conique (4) extérieure et de l'ensemble extérieur d'éléments de construction sont de forme conique.

6. Ensemble de serrage selon l'une quelconque des revendications 1 à 5, **caractérisé en ce qu'**au moins deux bagues coniques (4, 4') intérieures et/ou moins deux extérieures sont prévues en étant voisines en direction axiale.

7. Ensemble de serrage selon l'une quelconque des revendications 1 à 6, **caractérisé en ce que** plusieurs perçages (16, 23) sont distribués également le long de la périphérie et **en ce qu'**un perçage (16) sur deux, sur trois ou sur quatre comporte un taraudage de chasse (21), pour y faire passer une vis de serrage (5).

8. Bague de chasse (22) pour un ensemble de serrage pour la liaison par complémentarité de force d'un ensemble extérieur d'éléments de construction comportant un évidement sur un ensemble intérieur d'éléments de construction selon l'une quelconque des revendications 1 à 7,
**caractérisée par**
des perçages (23), susceptibles d'être amenés en alignement avec des taraudages de chasse (20) d'une bague conique (4) de l'ensemble de serrage, destinés à y faire passer des vis de chasse (21) qui sont susceptibles d'être vissées dans les taraudages de chasse (20) et par des surfaces de chasse prévues sur la périphérie entre les perçages (23), qui sont susceptibles d'être amenées en appui sur des têtes (18) de vis de serrage (5) partiellement desserrées, pour transmettre une force de chasse sur les têtes (18) de vis de serrage lors du vissage des vis de chasse (21), ainsi qu'avec un perçage (24) pour outil, destiné à faire passer un outil de vissage à travers une surface de chasse, le perçage (24) pour outil présentant un diamètre inférieur à celui du perçage (23) destiné à y faire passer la vis de chasse (21).

9. Bague de chasse selon la revendication 9 ou la revendication 10, **caractérisée en ce que** la bague de serrage (22) est fermée ou interrompue le long de sa périphérie par une encoche et/ou **en ce que** le long de sa périphérie, la bague de chasse (22) est divisée en au moins deux parties (22', 22").

10. Utilisation d'une bague de chasse (22) pour dégager un ensemble de serrage selon l'une quelconque des revendications 1 à 7 qui relie par complémentarité de force un ensemble extérieur de pièces de construction comportant un évidement avec un ensemble intérieur de pièces de construction, la bague de chasse (22) comportant des perçages (23) susceptibles d'être amenés en alignement avec des taraudages de chasse (20) d'une bague conique (4) de l'ensemble de serrage, pour y faire passer des vis de chasse (21) qui sont susceptibles d'être vissées dans les taraudages de chasse (20) et des surfaces de chasse prévues en périphérie entre les perçages (23), qui sont susceptibles d'être amenées en appui sur des têtes (18) de vis de serrage (5) partiellement desserrées, pour transmettre une force de chasse sur les têtes (18) de vis de serrage, lors du vissage serré des vis de chasse (21).

11. Bague conique (3) pour un ensemble de serrage pour la liaison par complémentarité de force d'un ensemble extérieur d'éléments de construction comportant un évidement sur un ensemble intérieur d'éléments de construction selon l'une quelconque des revendications 1 à 7, avec des perçages (16) destinés à y faire passer des vis de serrage (5) qui sont susceptibles d'être vissées sur une bague conique (4) supplémentaire voisine de l'ensemble de serrage,
**caractérisée en ce**
**qu'**un perçage (16) destiné à y faire passer une vis de serrage (5) comporte un taraudage de chasse (17) pour une vis de chasse (21) avec un diamètre qui est supérieur au diamètre d'un autre perçage (16) exempt de taraudage de chasse.

12. Bague conique selon la revendication 11, **caractérisée en ce que** la bague conique est une bague conique (3, 4) intérieure ou extérieure de l'ensemble de serrage et/ou **en ce qu'**un perçage (16) sur deux, sur trois ou sur quatre comporte un taraudage de chasse (17).

13. Bague conique selon la revendication 11 ou la revendication 12, **caractérisée en ce que** les perçages (16) destinés à y faire passer une vis de serrage (5) sont prévus dans une bride annulaire (15).

14. Bague conique selon la revendication 13, **caractérisée en ce que** la bride annulaire (15) s'étend en direction radiale en s'éloignant de l'ensemble intérieur d'éléments de construction et est susceptible d'être amenée en appui avec l'ensemble extérieur d'éléments de construction, en direction axiale ou **en ce que** la bride annulaire (15) s'étend en direction vers l'ensemble intérieur d'éléments de construction.
